# EUROPÄISCHE PATENTSCHRIFT

(11) **EP 4 127 547 B1**
(45) Veröffentlichungstag und Bekanntmachung des Hinweises auf die Patenterteilung: **11.12.2024**
(21) Anmeldenummer: 21704392.6
(22) Anmeldetag: 20.01.2021
(51) Int. Cl.: F16L 55/04, F16L 33/207, F16L 55/033

(54) **PULSATIONSDÄMPFERANORDNUNG**
PULSATION DAMPER ARRANGEMENT
ARRANGEMENT D'AMORTISSEUR DE PULSATION

(30) Priorität: 23.03.2020 DE 102020203731
(43) Veröffentlichungstag der Anmeldung: 08.02.2023
(73) Patentinhaber: ContiTech Techno-Chemie GmbH, 61184 Karben (DE)
(72) Erfinder: KEMPF, Dominik, 30419 Hannover (DE); WEISS, Peter, 30419 Hannover (DE)
(74) Vertreter: Continental Corporation
(86) Internationale Anmeldenummer: PCT/DE2021/200002
(87) Internationale Veröffentlichungsnummer: WO 2021/190711

(56) Entgegenhaltungen:
- EP-A1- 1 510 437
- DE-A1- 10 221 277
- DE-A1- 102014 100 347
- US-A1- 2008 272 589

## Beschreibung

Die vorliegende Erfindung betrifft eine Pulsationsdämpferanordnung gemäß dem Oberbegriff des Patentanspruchs 1.

Auf verschiedenen Gebieten der Technik sind Medien zu fördern. Dies können z.B. Gase wie z.B. Luft, Abgas und dergleichen sowie Fluide sein. Als Fluide können dies z.B. Wasser, Öl, Kraftstoff, Harnstoff, ein Kältemittel und dergleichen sein. Das Fördern des Mediums kann insbesondere mittels Rohre und Schläuchen erfolgen.

Bei der Förderung des Mediums kann es zu Druckstößen kommen, welche dynamische Druckänderungen des Mediums darstellen und auch als Pulsationen bezeichnet werden können. Die Druckstöße können in dem System der Medienförderung Druckanstiege bewirken, welche die Komponenten des Systems belasten und ggfs. beschädigen und hierdurch z.B. zu Undichtigkeiten führen können. Auch können hierdurch Geräusche erzeugt werden, welche von einem Benutzer als störend empfunden werden können.

Daher werden in derartigen Systemen der Medienförderung üblicherweise Pulsationsdämpfer eingesetzt, um die Druckstöße auszugleichen oder zumindest zu mindern. Druckstöße sind dabei üblicherweise unvermeidbar, sofern die Medienförderung geregelt wird, können jedoch durch die Verwendung von Pulsationsdämpfern gemindert werden. Auch können durch die Verwendung von Pulsationsdämpfern eine vergleichsweise gleichbleibende Fördergeschwindigkeit sowie eine vergleichsweise gleichbleibende Fördermenge des Mediums erreicht werden. Ebenso kann die Entstehung von Geräuschen gemindert werden, weshalb Pulsationsdämpfer auch als eine Form von Schalldämpfer angesehen werden können.

Ein System zur Medienförderung stellt auch der Kältemittelkreislauf einer Klimaanlage eines Kraftfahrzeugs dar, so dass die zuvor beschriebenen Pulsationsdämpfer auch in derartigen Kältemittelkreisläufen mit einem Kältemittel als Medium bzw. als Fluid verwendet werden können.

Bei derartigen Anwendungen wird ein Pulsationsdämpfer üblicherweise dadurch realisiert, dass eine großvolumige Hohlkammer gebildet wird, welche von dem Fluid durchströmt werden kann. Dabei weisen die Zuleitung und die Ableitung der Hohlkammer jeweils einen deutlich geringeren Strömungsquerschnitt auf, so dass sich die Druckstöße in der großvolumigen Hohlkammer ausbreiten, verteilen und hierdurch reduziert werden können. Die Hohlkammer kann somit wie ein Schalldämpfer wirken.

In jedem Fall ist es bekannt, Schall bei strömenden Medien mittels zusätzlicher schalldämpfender Elemente zu reduzieren, welche entsprechend als Schalldämpfer bezeichnet werden können. Beispielsweise sind Reflexionsschalldämpfer und Absorptionsschalldämpfer z.B. zur Verwendung bei Kraftfahrzeugen z.B. im Abgasstrang bekannt.

Neben der zuvor beschriebenen Pulsation des Mediums können z.B. bei einem Kältemittelkreislauf einer Klimaanlage eines Kraftfahrzeugs auch derartige Schwingungen durch den Kompressor sowie durch Schwingungen seitens des Motors und bzw. oder seitens des Chassis in das Kältemittels als Medium bzw. als Fluid eingeleitet werden, welche zusätzlich zu dämpfen sein können.

Nachteilig ist bei bekannten Schalldämpfern und insbesondere bei bekannten Pulsationsdämpfern, dass diese vergleichsweise hohe Kosten in der Herstellung und bzw. oder in der Montage verursachen können. Auch können derartige Schalldämpfer und insbesondere derartige Pulsationsdämpfer einen gewissen Bauraum einnehmen, welcher insbesondere im Motorraum von Kraftfahrzeugen begrenzt sein kann.

Die DE 10 2014 100 347 A1 beschreibt eine Dämpfungseinrichtung, welche ausgelegt ist, Schallenergie zu dämpfen, welche durch ein Fluid erzeugt wird, das durch ein Fluidsystem strömt. Die Dämpfungseinrichtung umfasst ein hohles rohrförmiges Gehäuse mit einem ersten Ende, einem zweiten Ende und einem Bund, der zwischen dem ersten Ende und dem zweiten Ende angeordnet ist. Das rohrförmige Gehäuse ist in zumindest einem Kanal des Fluidsystems angeordnet, und bildet einen Raum zwischen einer Innenseite des Kanals und dem ersten Ende des rohrförmigen Gehäuses und einen zweiten Raum zwischen der Innenseite des Kanals und dem zweiten Ende des rohrförmigen Gehäuses.

Die DE 102 21 277 A1 beschreibt, dass zum Einbau in Fluidsysteme, insbesondere in Hydrauliksysteme, eine Dämpfungseinrichtung vorgesehen ist, die einen Dehnschlauch aufweist, in dessen Innenraum ein weitgehend starres, gegen die Strömungsrichtung ausgerichtetes Dämpferrohr angeordnet ist. Das Dämpferrohr weist eine vollkommen geschlossene Rohrwandung auf, was einen guten Dämpfererfolg ermöglicht. Vorzugsweise ist das Dämpferrohr in Radialrichtung deutlich weniger flexibel als das äußere Dehnrohr. Dies unterstützt den Dämpfereffekt maßgeblich.

Die US 2008/0272589 A1 beschreibt eine druckpulsationsdämpfende Fluidversorgungsleitung, die Folgendes umfasst: ein flexibles Umhüllungsrohr, das einander gegenüberliegende Endabschnitte aufweist; rohrförmige Elemente, die jeweils erste Achsen aufweisen und mit den Endabschnitten verbunden sind; jeweilige Kupplungen, die mit den rohrförmigen Elementen so verbunden sind, dass sie frei drehbar sind; jeweilige flexible Rohre, die jeweils feste Abschnitte aufweisen, die mit den jeweiligen Kupplungen verbunden sind, und jeweilige freie Abschnitte, die radial einander gegenüberliegen.

Eine Aufgabe der vorliegenden Erfindung ist es, eine Pulsationsdämpferanordnung der eingangs beschriebenen Art bereit zu stellen, welche zu geringeren Kosten herzustellen und bzw. oder zu montieren sein und bzw. oder einen geringeren Bauraum aufweisen kann als bisher bekannte derartige Pulsationsdämpferanordnungen. Zusätzlich oder alternativ soll die Dichtigkeit, die Robustheit und bzw. oder die Langlebigkeit derartiger Pulsationsdämpferanordnungen verbessert werden. Zumindest soll eine Alternative zu bekannten derartigen Pulsationsdämpferanordnungen geschaffen werden.

Die Aufgabe wird erfindungsgemäß durch eine Pulsationsdämpferanordnung mit den Merkmalen gemäß Patentanspruch 1 gelöst. Vorteilhafte Weiterbildungen sind in den Unteransprüchen beschrieben.

Somit betrifft die vorliegende Erfindung eine Pulsationsdämpferanordnung mit einer ersten Medienleitung mit einem offenen Ende, mit einer zweiten Medienleitung mit einem offenen Ende, welches das offene Ende der ersten Medienleitung in sich aufnimmt, mit einem Verbindungselement, welches das offene Ende der zweiten Medienleitung umschließt und wenigstens kraftschlüssig auf dem offenen Ende der ersten Medienleitung hält, und mit einem Einsatzelement mit einem Verbindungsabschnitt, welcher am offenen Ende der ersten Medienleitung zumindest im Wesentlichen innerhalb der ersten Medienleitung angeordnet und ausgebildet ist, das offene Ende der ersten Medienleitung innenseitig gegen das Verbindungselement abzustützen, wobei das Einsatzelement eine Durchflussöffnung aufweist, welche die erste Medienleitung und die zweite Medienleitung medienführend miteinander verbindet.

Eine derartige mediendichte und insbesondere fluiddichte Verbindung zwischen zwei Medienleitungen kann beispielweise durch Vercrimpen eines metallischen Verbindungselements gegenüber einem Einsatzelement erfolgen, so dass die beiden zu verbindenden Medienleitungen radial zwischen dem Verbindungselement und dem Einsatzelement eingeklemmt werden können. Das Einsatzelement kann hierbei der Stabilität beim Vercrimpen dienen.

Die Pulsationsdämpferanordnung ist dadurch gekennzeichnet, dass das Einsatzelement dem Verbindungsabschnitt abgewandt einen Längsabschnitt aufweist, welcher sich innerhalb der ersten Medienleitung abschnittsweise von dem Verbindungsabschnitt weg erstreckt, wobei zwischen dem Längsabschnitt des Einsatzelements und der ersten Medienleitung zumindest abschnittsweise in der Längsrichtung und bzw. oder in der Umfangsrichtung ein radialer Spalt ausgebildet ist.

Somit kann zwischen einer radialen Außenfläche des Verbindungsabschnitts des Einsatzelements und der radialen Innenfläche der ersten Medienleitung ein Hohlraum geschaffen werden, welcher von dem Medium erreicht werden kann, welches durch die beiden Medienleitungen gefördert werden bzw. strömen kann. Dieser Hohlraum kann als Pulsationsdämpfer dienen und somit Schwingungen im Medium reduzieren.

Mit anderen Worten ist es bekannt, heutzutage in manchen Fällen ein Einsatzelement, auch "insert" genannt, in eine Schlaucharmatur zu stecken, um die Schlaucharmatur durch das Einsatzelement für ein Vercrimpen zu stabilisieren.

Es kann ein derartiges Einsatzelement zusätzlich oder alternativ dazu verwendet werden, z.B. die Kältemittelpulsationen in einer Klimaleitung zu reduzieren, indem das Einsatzelement ausgebildet ist, durch die Erzeugung von Schall-Interferenzen die Luftsäulenschwingungen im Kältemittel als Medium zu reduzieren. Hierzu wird das Einsatzelement in der Längsrichtung, d.h. in der Strömungsrichtung des Mediums, verlängert, so dass sich das Einsatzelement mit einer definierten Länge in die erste Medienleitung hinein erstreckt. Der sich daraus ergebende Ringspalt zwischen Einsatzelement und erster Medienleitung ist eine Volumen-Kammer mit definierter Zugangsgröße in Form des Ringspalts zur schwingende Gassäule und kann, je nach Auslegung, als Helmholtz-Resonator eine phasenverschobene Welle entgegensteuern und damit die ankommende Welle im Medium egalisieren.

Vorteilhaft ist dabei gegenüber bekannten separaten Pulsations- und Schalldämpfern, dass kein zusätzliches Bauteil verwendet werden muss, was zu zusätzlichen Kosten in der Herstellung und bzw. oder in der Montage führen könnte. Auch würde ein zusätzliches Bauteil einen zusätzlichen Bauraum erfordern. Ferner könnte es zu Dichtigkeitsproblemen z.B. zwischen den Medienleitungen und dem separaten Bauteil kommen. Auch dies würde zu einem zusätzlichen Aufwand und insbesondere zu zusätzlichen Kosten führen, um die Dichtigkeit sicherzustellen.

Statt der Verwendung eines separaten Bauteils eines Pulsations- und Schalldämpfers kann erfindungsgemäß ein Einsatzelement als üblicherweise ohnehin vorhandenes Bauteil in seiner Funktion erweitert werden. Dies kann den Aufwand und insbesondere die Kosten hinsichtlich Herstellung und bzw. oder Montage geringhalten. Insbesondere kann dies sozusagen "bauraumneutral" erfolgen, da das Einsatzelement innerhalb der ersten Medienleitung angeordnet ist.

Gemäß einem Aspekt der Erfindung ist der radiale Spalt in der Längsrichtung und bzw. oder in der Umfangsrichtung durchgängig ausgebildet. Dies kann die Gestaltungsmöglichkeiten erhöhen und bzw. oder die Wirkung des radialen Spalts als Hohlkammer verstärken.

Gemäß einem weiteren Aspekt der Erfindung überlappen sich der Längsabschnitt des Einsatzelements und das Verbindungselement radial. Dies kann das Volumen der Hohlkammer erhöhen, ohne das Einsatzelement verlängern zu müssen. Das Einsatzelement kann entsprechend kurzgehalten werden, was Material und bzw. oder Bauraum sparen kann.

Gemäß einem weiteren Aspekt der Erfindung weist ein offenes Ende des Verbindungsabschnitts des Einsatzelements einen radial nach außen ragenden Anschlag auf, gegen welchen das offene Ende der ersten Medienleitung in der Längsrichtung zumindest teilweise, vorzugsweise vollständig, anliegt. Dies kann zumindest einseitig einen sicheren und bzw. oder einen definierten Halt des offenen Endes der ersten Medienleitung gegenüber dem Einsatzelement ermöglichen. Gleichzeitig kann eine definierte Positionierung des Einsatzelements in der Durchflussöffnung der ersten Medienleitung erreicht werden. Insbesondere kann verhindert werden, dass das Einsatzelement zu tief in die Durchflussöffnung der ersten Medienleitung eingeschoben wird und dann ggfs. seine stabilisierende Wirkung gegenüber dem Verbindungselement nicht mehr ausüben kann. Dies kann durch die Ausbildung eines radialen Anschlags einfach, kostengünstig und bzw. oder verlässlich erfolgen. Der Verbindungsabschnitt des Einsatzelements kann sich dabei in der Längsrichtung über den radial nach außen ragenden Anschlag hinaus in die Durchflussöffnung der zweiten Medienleitung hineinerstrecken, um ggfs. auch hier einen radialen Spalt auszubilden.

Gemäß einem weiteren Aspekt der Erfindung schließt ein offenes Ende des Verbindungsabschnitts des Einsatzelements mit einem radial nach außen ragenden Anschlag ab, gegen welchen das offene Ende der ersten Medienleitung in der Längsrichtung zumindest teilweise, vorzugsweise vollständig, anliegt. Hierdurch können die zuvor beschrieben Eigenschaften erreicht und gleichzeitig die Länge des Einsatzelements möglichst geringgehalten werden.

Erfindungsgemäß weist der Verbindungsabschnitt des Einsatzelements wenigstens eine Aufnahme auf, welche ausgebildet ist, die erste Medienleitung abschnittsweise radial aufzunehmen und in der Längsrichtung formschlüssig zu halten. Dies kann die Verbindung zwischen dem Einsatzelement und der ersten Medienleitung, insbesondere bei der Montage vor der Verbindung der ersten Medienleitung mit der zweiten Medienleitung und insbesondere vor der Verwendung des Verbindungselements, verbessern.

Erfindungsgemäß weist der Verbindungsabschnitt des Einsatzelements eine Mehrzahl von Aufnahmen auf, welche in der Umfangsrichtung zueinander versetzt angeordnet sind. Dies kann die zuvor beschriebe Wirkung verstärken und insbesondere in der Umfangsrichtung verteilt umsetzen.

Gemäß einem weiteren Aspekt der Erfindung ist der Verbindungsabschnitt des Einsatzelements zumindest abschnittsweise radial dicker als der Längsabschnitt des Einsatzelements ausgebildet. Dies kann die Stabilität des Verbindungsabschnitts des Einsatzelements erhöhen bzw. sicherstellen, um von radial außen Kräfte des Verbindungselements aufnehmen zu können.

Im Umkehrschluss kann der Längsabschnitt des Einsatzelements radial dünner als der Verbindungsabschnitt des Einsatzelements ausgebildet werden. Dies kann Material und damit Kosten und bzw. oder Gewicht sparen, da von dem Längsabschnitt des Einsatzelements keinerlei Kräfte aufgenommen werden müssen und die Wandstärke des Längsabschnitts des Einsatzelements lediglich ausreichend sein muss, um den radialen Spalt auszubilden.

Gemäß einem weiteren Aspekt der Erfindung ist der Verbindungsabschnitt des Einsatzelements in der Längsrichtung und bzw. oder in der Umfangsrichtung durchgängig radial dicker als der Längsabschnitt des Einsatzelements ausgebildet. Dies kann die zuvor beschrieben Eigenschaften des Verbindungsabschnitts des Einsatzelements verstärken bzw. durchgängig bewirken.

Gemäß einem weiteren Aspekt der Erfindung weist das Einsatzelement in der Längsrichtung eine vorbestimmte Länge auf, welche ausgebildet ist, eine vorbestimmte Frequenz einer Pulsation eines Mediums zu dämpfen. Mit anderen Worten kann die zu dämpfende Frequenz über die Länge des Einsatzelements in der Längsrichtung als Strömungsrichtung des Mediums beeinflusst und je nach Anwendungsfall gewählt werden, um gezielt diejenige Frequenz zu bedämpfen, welche bei diesem Anwendungsfall störend auftritt. Hierdurch kann eine gezielte Bedämpfung von Frequenzen erfolgen.

Gemäß einem weiteren Aspekt der Erfindung weist das offene Ende der ersten Medienleitung nach radial außen und bzw. oder nach radial innen gerichtet zumindest abschnittsweise in der Längsrichtung und bzw. oder in der Umfangsrichtung eine erhöhte Rauigkeit auf. Dies kann z.B. durch eine vergleichsweise unebene Oberfläche erreicht werden. Auch kann dies die Ausbildung von Erhebungen und bzw. oder von Vertiefungen umfassen. In jedem Fall kann hierdurch ein Halt gegenüber der zweiten Medienleitung und bzw. oder gegenüber dem Einsatzelement verbessert werden.

Gemäß einem weiteren Aspekt der Erfindung ist die erste Medienleitung ein starres Rohr. Das Rohr kann als starre Medienleitung insbesondere aus Kunststoff oder aus Metall sein. Dies kann die Anwendung der Erfindung auf derartige Medienleitungen ermöglichen.

Gemäß einem weiteren Aspekt der Erfindung ist die zweite Medienleitung ein flexibler Schlauch. Der Schlauch kann als flexible Medienleitung insbesondere aus einem elastomeren Material wie z.B. aus Gummi sein. Dies kann die Anwendung der Erfindung auf derartige Medienleitungen ermöglichen.

Gemäß einem weiteren Aspekt der Erfindung ist das Einsatzelement ein Spritzgussteil aus Kunststoff oder ein Metallteil. Dies kann die Materialkosten und bzw. oder das Gewicht des Einsatzelements geringhalten. Dies kann die Anwendung der Erfindung auf derartige Einsatzelemente ermöglichen.

Gemäß einem weiteren Aspekt der Erfindung ist das Verbindungselement eine Metallhülse. Dies kann die Materialkosten und bzw. oder das Gewicht des Verbindungselements geringhalten. Dies kann die Anwendung der Erfindung auf derartige Verbindungselemente ermöglichen.

Ein Ausführungsbeispiel und weitere Vorteile der Erfindung werden nachstehend im Zusammenhang mit den folgenden Figuren erläutert. Darin zeigt:
- Fig. 1: einen schematischen Längsschnitt durch eine erfindungsgemäße Pulsationsdämpferanordnung; und
- Fig. 2: eine perspektivische Darstellung eines erfindungsgemäßen Einsatzelements.

Die Beschreibung der o.g. Figuren erfolgt in zylindrischen Koordinaten mit einer Längsrichtung X, einer zur Längsrichtung X senkrecht ausgerichteten radialen Richtung R sowie einer um die Längsrichtung X umlaufenden Umfangsrichtung U. Die Längsrichtung X, die radiale Richtung R und die Umfangsrichtung U können gemeinsam auch als Raumrichtungen X, R, U bzw. als zylindrische Raumrichtungen X, R, U bezeichnet werden.

Eine erfindungsgemäße Pulsationsdämpferanordnung 1 besteht aus einer ersten Medienleitung 10 in Form eines starren Rohres 10 aus Kunststoff oder aus Metall, aus einer zweiten Medienleitung 11 in Form eines flexiblen Schlauches 11 aus Gummi, aus einem Verbindungselement 12 in Form einer Metallhülse 12 sowie aus einem Einsatzelement 13, welches als Spritzgussteil 13 aus Kunststoff oder als Metallteil 13 ausgebildet sein kann. Die Pulsationsdämpferanordnung 1 kann auch als Pulsationsdämpfersystem 1 bezeichnet werden.

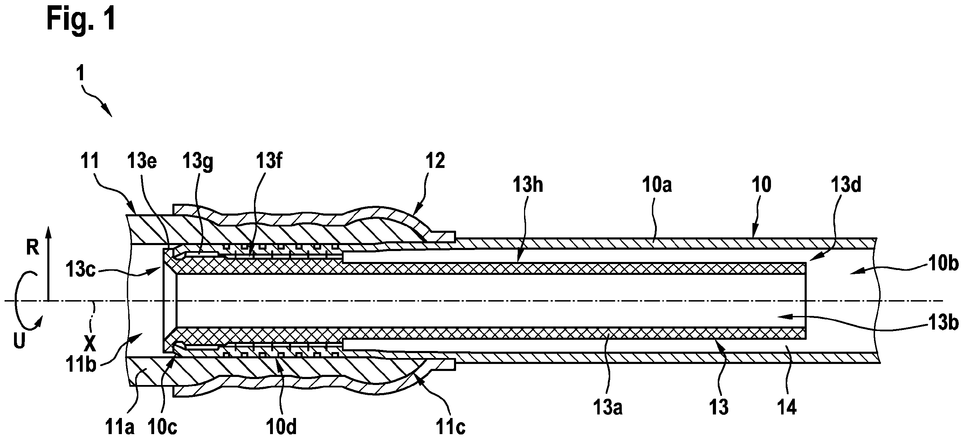

Das starre Rohr 10 weist einen Medienleitungskörper 10a in Form eines Rohrkörpers 10a auf, welcher auch als Rohrwandung 10a bezeichnet werden kann. Der Rohrkörper 10a erstreckt sich in der Längsrichtung X und weist in der Längsrichtung X auch eine Durchflussöffnung 10b auf. In der Darstellung der Fig. 1 schließt das starre Rohr 10 bzw. dessen Rohrkörper 10a nach links hin mit einem offenen Ende 10c ab, welchem ein Verbindungsbereich 10d vorgelagert ist. Der Verbindungsbereich 10d weist eine rauere äußere Oberfläche als die übrige Oberfläche des starren Rohres 10 auf.

Der flexible Schlauch 11 weist einen Medienleitungskörper 11a in Form eines Schlauchkörpers 11a auf, welcher auch als Schlauchwandung 11a bezeichnet werden kann. Der Schlauchkörper 11a erstreckt sich in der Längsrichtung X und weist in der Längsrichtung X auch eine Durchflussöffnung 11b auf. In der Darstellung der Fig. 1 schließt der flexible Schlauch 11 bzw. dessen Schlauchkörper 11a nach rechts hin mit einem offenen Ende 11c ab, welches das offene Ende 10c des starren Rohres 10 von radial außen umschließt und mit seiner radial inneren Oberfläche an der radial äußeren Oberfläche des Verbindungsbereichs 10d des starren Rohes 10 anliegt. Der Halt zwischen dem flexiblen Schlauch 11 und dem starren Rohr 10 kann dabei, insbesondere bei einem Zwischenschritt der Montage zum Verbinden des flexiblen Schlauches 11 mit dem starren Rohr 10, durch die vergleichsweise raue äußere Oberfläche des Verbindungsbereichs 10d des starren Rohres 10 verbessert werden.

Das Einsatzelement 13 weist einen Einsatzelementkörper 13a auf, welcher einstückig z.B. durch Spritzgießen ausgebildet ist. Der Einsatzelementkörper 13a erstreckt sich in der Längsrichtung X und weist in der Längsrichtung X auch eine Durchflussöffnung 13b auf, welche die Durchflussöffnung 10b des starren Rohres 10 mit der Durchflussöffnung 11b des flexiblen Schlauches 11 medienführend verbindet. Der Einsatzelementkörper 13a bildet in der Darstellung der Fig. 1 nach links einen Verbindungsabschnitt 13f und nach rechts einen Längsabschnitt 13h aus.

Der Verbindungsabschnitt 13f des Einsatzelements 13 ist sowohl radial innerhalb des Verbindungsbereichs 10d des starren Rohres 10 als auch radial innerhalb des flexiblen Schlauches 11 angeordnet und wird von radial außerhalb des flexiblen Schlauches 11 von dem Verbindungselement 12 umschlossen. Das Verbindungselement 12 als Metallhülse 12 ist dabei durch Vercrimpen derart auf den dem offenen Ende 11c des flexiblen Schlauches 11 vorgelagerten Abschnitt des flexiblen Schlauches 11 radial aufgepresst, dass der flexible Schlauch 11 mediendicht auf dem starren Rohr 10 gehalten wird. Bei dem Vercrimpen stabilisiert der Verbindungsabschnitt 13f des Einsatzelements 13 das starre Rohr 10 radial von innen derart, dass das Vercrimpen mit einer ausreichend hohen Kraft durchgeführt werden kann, um die erforderliche Mediendichtigkeit zu erzielen.

In der Darstellung der Fig. 1 schließt der Verbindungsabschnitt 13f des Einsatzelements 13 bzw. dessen Einsatzelementkörpers 13a nach links hin mit einem offenen Ende 13c in Form eines radial nach außen ragenden Anschlags 13e als Flansch 13e ab, gegen welchen das offene Ende 10c des starren Rohres 10 in der Längsrichtung X vollständig anliegt. Dies kann insbesondere die Positionierung des Einsatzelements 13 in der Durchflussöffnung 10b des starren Rohes 10 verbessern und ein ungewolltes Hineinrutschen des Einsatzelements 13 in die Durchflussöffnung 10b des starren Rohes 10 verhindern.

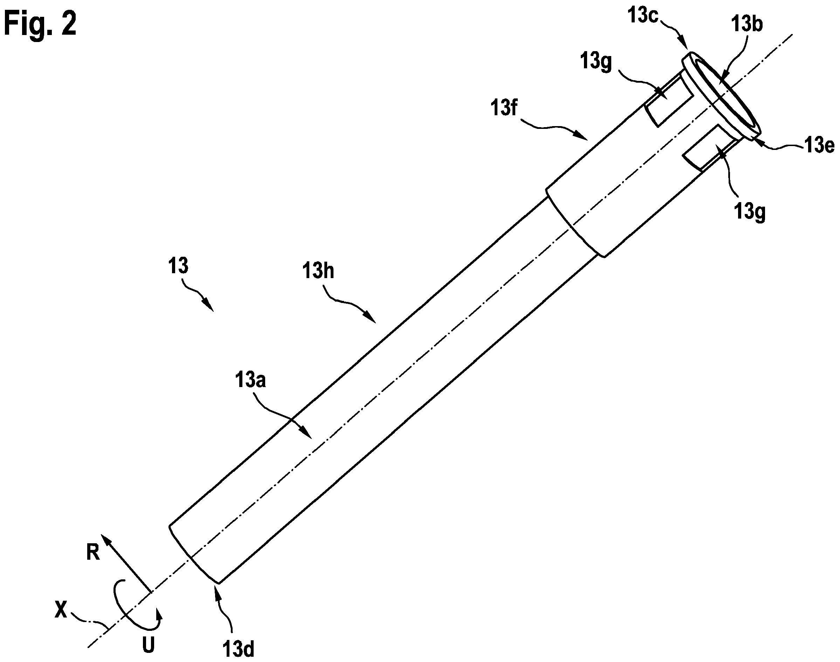

Im Verbindungsabschnitt 13f des Einsatzelements 13 bzw. dessen Einsatzelementkörpers 13a sind mehrere Aufnahmen 13g in Form von Vertiefungen 13g und insbesondere in Form von rechteckigen Vertiefungen 13g ausgebildet, vgl. insbesondere Fig. 2, in welche das Material des Rohrkörpers 10a radial von außen beim Vercrimpen hineingedrückt werden kann. Dies kann den Halt zwischen dem Rohrkörper 10a des starren Rohres 10 und dem Einsatzelement 13 bzw. dessen Einsatzelementkörpers 13a verbessern. Die rechteckigen Vertiefungen 13g sind in der Umfangsrichtung U gleichmäßig verteilt angeordnet.

In der Längsrichtung X gegenüberliegend, d.h. in der Darstellung der Fig. 1 nach rechts hin, schließt der Längsabschnitt 13h des Einsatzelements 13 bzw. dessen Einsatzelementkörpers 13a mit einem offenen Ende 13d ab, welches frei in die Durchflussöffnung 10b des starren Rohres 10 hineinragt. Dabei ist zwischen der radial äußeren Oberfläche des Längsabschnitts 13h des Einsatzelements 13 und der radial inneren Oberfläche des starren Rohres 10 bzw. dessen Rohrkörpers 10a ein radialer Spalt 14 ausgebildet, welcher sich in der Längsrichtung X bis zwischen den flexiblen Schlauch 11 und die Metallhülse 12 erstreckt. Der radiale Spalt 14 ist in der Längsrichtung X sowie in der Umfangsrichtung U durchgängig ausgebildet.

Dieser radiale Spalt 14 stellt eine Hohlkammer 14 dar, welche, je nach Auslegung, als Helmholtz-Resonator wirken und so durch die Erzeugung einer phasenverschobenen Welle im fließenden Medium dort auftretenden Schwindungen und bzw. oder Pulsationen entgegenwirken kann. Somit kann erfindungsgemäß eine Dämpfung von Schwingungen, Schall bzw. Pulsationen ohne zusätzliche Elemente erreicht werden, indem lediglich der Funktionsumfang des Einsatzelements 13, welches bisher lediglich beim Vercrimpen eine Funktion hat, erweitert wird. Dies kann insbesondere eine Dämpfung von Schwingungen, Schall bzw. Pulsationen mit geringem Aufwand und insbesondere mit geringen Kosten sowie ohne zusätzlichen Bauraum ermöglichen.

### Bezugszeichenliste

### (Teil der Beschreibung)

- R: radiale Richtung
- U: Umfangsrichtung
- X: Längsrichtung

- 1: Pulsationsdämpferanordnung; Pulsationsdämpfersystem

- 10: erste Medienleitung; starres Rohr
- 10a: Medienleitungskörper; Rohrkörper; Rohrwandung
- 10b: Durchflussöffnung der ersten Medienleitung 10
- 10c: offenes Ende der ersten Medienleitung 10
- 10d: Verbindungsbereich der ersten Medienleitung 10

- 11: zweite Medienleitung; flexibler Schlauch
- 11a: Medienleitungskörper; Schlauchkörper; Schlauchwandung
- 11b: Durchflussöffnung der zweiten Medienleitung 11
- 11c: offenes Ende der zweiten Medienleitung 11

- 12: Verbindungselement; Metallhülse

- 13: Einsatzelement; Spritzgussteil; Metallteil
- 13a: Einsatzelementkörper
- 13b: Durchflussöffnung des Einsatzelements 13
- 13c: offenes Ende des Verbindungsabschnitts 13f des Einsatzelements 13
- 13d: offenes Ende des Längsabschnitts 13h des Einsatzelements 13
- 13e: Anschlag bzw. Flansch des offenen Endes 13c des Verbindungsabschnitts 13f des Einsatzelements 13
- 13f: Verbindungsabschnitt des Einsatzelements 13
- 13g: Aufnahme bzw. Vertiefung des Verbindungsabschnitts 13f des Einsatzelements 13
- 13h: Längsabschnitt des Einsatzelements 13

- 14: radialer Spalt bzw. Hohlkammer zwischen Längsabschnitt 13h des Einsatzelements 13 und erster Medienleitung 10

## Patentansprüche

1. Pulsationsdämpferanordnung (1)
mit einer ersten Medienleitung (10) mit einem offenen Ende (10c),
mit einer zweiten Medienleitung (11) mit einem offenen Ende (11c), welches das offene Ende (10c) der ersten Medienleitung (10) in sich aufnimmt,
mit einem Verbindungselement (12), welches das offene Ende (11c) der zweiten Medienleitung (11) umschließt und wenigstens kraftschlüssig auf dem offenen Ende (10c) der ersten Medienleitung (10) hält, und
mit einem Einsatzelement (13) mit einem Verbindungsabschnitt (13f), welcher am offenen Ende (10c) der ersten Medienleitung (10) zumindest im Wesentlichen innerhalb der ersten Medienleitung (10) angeordnet und ausgebildet ist, das offene Ende (10c) der ersten Medienleitung (10) innenseitig gegen das Verbindungselement (12) abzustützen,
wobei das Einsatzelement (13) eine Durchflussöffnung (13b) aufweist, welche die erste Medienleitung (10) und die zweite Medienleitung (11) medienführend miteinander verbindet,
wobei das Einsatzelement (13) dem Verbindungsabschnitt (13f) abgewandt einen Längsabschnitt (13h) aufweist, welcher sich innerhalb der ersten Medienleitung (10) abschnittsweise von dem Verbindungsabschnitt (13f) weg erstreckt, und
wobei zwischen dem Längsabschnitt (13h) des Einsatzelements (13) und der ersten Medienleitung (10) zumindest abschnittsweise in der Längsrichtung (X) und/oder in der Umfangsrichtung (U) ein radialer Spalt (14) ausgebildet ist,
**dadurch gekennzeichnet, dass**
der Verbindungsabschnitt (13f) des Einsatzelements (13) eine Mehrzahl von Aufnahmen (13g) aufweist, welche in der Umfangsrichtung (U) zueinander versetzt angeordnet sind sowie die erste Medienleitung (10) abschnittsweise radial aufnehmen und in der Längsrichtung (X) formschlüssig halten.

2. Pulsationsdämpferanordnung (1) nach Anspruch 1, **dadurch gekennzeichnet, dass** der radiale Spalt (14) in der Längsrichtung (X) und/oder in der Umfangsrichtung (U) durchgängig ausgebildet ist.

3. Pulsationsdämpferanordnung (1) nach Anspruch 1 oder 2, **dadurch gekennzeichnet, dass**
sich der Längsabschnitt (13h) des Einsatzelements (13) und das Verbindungselement (12) radial überlappen.

4. Pulsationsdämpferanordnung (1) nach einem der vorangehenden Ansprüche,
**dadurch gekennzeichnet, dass**
ein offenes Ende (13c) des Verbindungsabschnitts (13f) des Einsatzelements (13) einen radial nach außen ragenden Anschlag (13e) aufweist, gegen welchen das offene Ende (10c) der ersten Medienleitung (10) in der Längsrichtung (X) zumindest teilweise, vorzugsweise vollständig, anliegt.

5. Pulsationsdämpferanordnung (1) nach einem der vorangehenden Ansprüche,
**dadurch gekennzeichnet, dass**
ein offenes Ende (13c) des Verbindungsabschnitts (13f) des Einsatzelements (13) mit einem radial nach außen ragenden Anschlag (13e) abschließt, gegen welchen das offene Ende (10c) der ersten Medienleitung (10) in der Längsrichtung (X) zumindest teilweise, vorzugsweise vollständig, anliegt.

6. Pulsationsdämpferanordnung (1) nach einem der vorangehenden Ansprüche,
**dadurch gekennzeichnet, dass**
der Verbindungsabschnitt (13f) des Einsatzelements (13) zumindest abschnittsweise radial dicker als der Längsabschnitt (13h) des Einsatzelements (13) ausgebildet ist.

7. Pulsationsdämpferanordnung (1) nach einem der vorangehenden Ansprüche,
**dadurch gekennzeichnet, dass**
der Verbindungsabschnitt (13f) des Einsatzelements (13) in der Längsrichtung (X) und/oder in der Umfangsrichtung (U) durchgängig radial dicker als der Längsabschnitt (13h) des Einsatzelements (13) ausgebildet ist.

8. Pulsationsdämpferanordnung (1) nach einem der vorangehenden Ansprüche, **dadurch gekennzeichnet, dass**
das Einsatzelement (13) in der Längsrichtung (X) eine vorbestimmte Länge aufweist, welche ausgebildet ist, eine vorbestimmte Frequenz einer Pulsation eines Mediums zu dämpfen.

9. Pulsationsdämpferanordnung (1) nach einem der vorangehenden Ansprüche, **dadurch gekennzeichnet, dass**
das offene Ende (10c) der ersten Medienleitung (10) nach radial außen und/oder nach radial innen gerichtet zumindest abschnittsweise in der Längsrichtung (X) und/oder in der Umfangsrichtung (U) eine erhöhte Rauigkeit aufweist.

10. Pulsationsdämpferanordnung (1) nach einem der vorangehenden Ansprüche, **dadurch gekennzeichnet, dass**
die erste Medienleitung (10) ein starres Rohr (10) ist.

11. Pulsationsdämpferanordnung (1) nach einem der vorangehenden Ansprüche, **dadurch gekennzeichnet, dass**
die zweite Medienleitung (11) ein flexibler Schlauch (11) ist.

12. Pulsationsdämpferanordnung (1) nach einem der vorangehenden Ansprüche, **dadurch gekennzeichnet, dass**
das Einsatzelement (13) ein Spritzgussteil (13) aus Kunststoff oder ein Metallteil (13) ist.

13. Pulsationsdämpferanordnung (1) nach einem der vorangehenden Ansprüche, **dadurch gekennzeichnet, dass**
das Verbindungselement (12) eine Metallhülse (12) ist.

## Claims

1. Pulsation-damper arrangement (1)
having a first media line (10) with an open end (10c),
having a second media line (11) with an open end (11c) which accommodates therein the open end (10c) of the first media line (10),
having a connecting element (12) which surrounds the open end (11c) of the second media line (11) and holds said end at least in a force-fitting manner on the open end (10c) of the first media line (10), and
having an insert element (13) with a connecting portion (13f) which is arranged at least substantially within the first media line (10) at the open end (10c) of the first media line (10) and which is configured to support the open end (10c) of the first media line (10) against the connecting element (12) from the inside,
wherein the insert element (13) has a throughflow opening (13b) which connects the first media line (10) and the second media line (11) to one another in a media-conducting manner,
wherein, directed away from the connecting portion (13f), the insert element (13) has a longitudinal portion (13h) which, within the first media line (10), sectionally extends away from the connecting portion (13f), and
wherein a radial gap (14) is formed between the longitudinal portion (13h) of the insert element (13) and the first media line (10) at least sectionally in the longitudinal direction (X) and/or in the circumferential direction (U),
**characterized in that**
the connecting portion (13f) of the insert element (13) has a plurality of receptacles (13g) which are arranged offset from one another in the circumferential direction (U) and which sectionally radially receive the first media line (10) and hold said media line in a form-fitting manner in the longitudinal direction (X).

2. Pulsation-damper arrangement (1) according to Claim 1, **characterized in that** the radial gap (14) in the longitudinal direction (X) and/or in the circumferential direction (U) is of continuous form.

3. Pulsation-damper arrangement (1) according to Claim 1 or 2, **characterized in that**
the longitudinal portion (13h) of the insert element (13) and the connecting element (12) overlap radially.

4. Pulsation-damper arrangement (1) according to one of the preceding claims, **characterized in that**
an open end (13c) of the connecting portion (13f) of the insert element (13) has a radially outwardly projecting stop (13e) against which the open end (10c) of the first media line (10) at least partially, preferably completely, bears in the longitudinal direction (X).

5. Pulsation-damper arrangement (1) according to one of the preceding claims, **characterized in that**
an open end (13c) of the connecting portion (13f) of the insert element (13) terminates by way of a radially outwardly projecting stop (13e) against which the open end (10c) of the first media line (10) at least partially, preferably completely, bears in the longitudinal direction (X).

6. Pulsation-damper arrangement (1) according to one of the preceding claims, **characterized in that**
the connecting portion (13f) of the insert element (13) is configured to be at least sectionally radially thicker than the longitudinal portion (13h) of the insert element (13).

7. Pulsation-damper arrangement (1) according to one of the preceding claims, **characterized in that**
the connecting portion (13f) of the insert element (13) is continuously radially thicker than the longitudinal portion (13h) of the insert element (13) in the longitudinal direction (X) and/or in the circumferential direction (U).

8. Pulsation-damper arrangement (1) according to one of the preceding claims, **characterized in that**
the insert element (13), in the longitudinal direction (X), has a predetermined length which is configured for damping of a predetermined frequency of a pulsation of a medium.

9. Pulsation-damper arrangement (1) according to one of the preceding claims, **characterized in that**
the open end (10c) of the first media line (10) has, directed radially outwards and/or radially inwards, increased roughness at least sectionally in the longitudinal direction (X) and/or in the circumferential direction (U).

10. Pulsation-damper arrangement (1) according to one of the preceding claims, **characterized in that**
the first media line (10) is a rigid pipe (10).

11. Pulsation-damper arrangement (1) according to one of the preceding claims, **characterized in that**
the second media line (11) is a flexible tube (11).

12. Pulsation-damper arrangement (1) according to one of the preceding claims, **characterized in that**
the insert element (13) is an injection-moulded part (13) composed of plastic or is a metal part (13).

13. Pulsation-damper arrangement (1) according to one of the preceding claims, **characterized in that**
the connecting element (12) is a metal sleeve (12).

## Revendications

1. Agencement d'amortisseur de pulsations (1)
avec une première conduite de fluide (10) ayant une extrémité ouverte (10c), avec une deuxième conduite de fluide (11) ayant une extrémité ouverte (11c) qui reçoit en elle l'extrémité ouverte (10c) de la première conduite de fluide (10), avec un élément de liaison (12) qui entoure l'extrémité ouverte (11c) de la deuxième conduite de fluide (11) et la maintient au moins par adhérence sur l'extrémité ouverte (10c) de la première conduite de fluide (10), et
avec un élément d'insertion (13) avec une section de liaison (13f), qui est agencée à l'extrémité ouverte (10c) de la première conduite de fluide (10) au moins essentiellement à l'intérieur de la première conduite de fluide (10) et qui est réalisée pour soutenir l'extrémité ouverte (10c) de la première conduite de fluide (10) du côté intérieur contre l'élément de liaison (12),
l'élément d'insertion (13) présentant une ouverture d'écoulement (13b) qui relie entre elles la première conduite de fluide (10) et la deuxième conduite de fluide (11) en guidant le fluide,
l'élément d'insertion (13) présentant, à l'opposé de la section de liaison (13f), une section longitudinale (13h) qui s'étend à l'intérieur de la première conduite de fluide (10), par sections, en s'éloignant de la section de liaison (13f), et
une fente radiale (14) étant réalisée au moins par sections dans la direction longitudinale (X) et/ou dans la direction circonférentielle (U) entre la section longitudinale (13h) de l'élément d'insertion (13) et la première conduite de fluide (10),
**caractérisé en ce que**
la section de liaison (13f) de l'élément d'insertion (13) présente une pluralité de logements (13g) qui sont agencés de manière décalée les uns par rapport aux autres dans la direction circonférentielle (U) et qui reçoivent radialement par sections la première conduite de fluide (10) et la maintiennent par complémentarité de forme dans la direction longitudinale (X).

2. Agencement d'amortisseur de pulsations (1) selon la revendication 1, **caractérisé en ce que**
la fente radiale (14) est réalisée continue dans la direction longitudinale (X) et/ou dans la direction circonférentielle (U).

3. Agencement d'amortisseur de pulsations (1) selon la revendication 1 ou 2, **caractérisé en ce que**
la section longitudinale (13h) de l'élément d'insertion (13) et l'élément de liaison (12) se chevauchent radialement.

4. Agencement d'amortisseur de pulsations (1) selon l'une quelconque des revendications précédentes, **caractérisé en ce que**
une extrémité ouverte (13c) de la section de liaison (13f) de l'élément d'insertion (13) présente une butée (13e) faisant saillie radialement vers l'extérieur, contre laquelle l'extrémité ouverte (10c) de la première conduite de fluide (10) s'applique au moins partiellement, de préférence complètement, dans la direction longitudinale (X).

5. Agencement d'amortisseur de pulsations (1) selon l'une quelconque des revendications précédentes, **caractérisé en ce que**
une extrémité ouverte (13c) de la section de liaison (13f) de l'élément d'insertion (13) se termine par une butée (13e) faisant saillie radialement vers l'extérieur, contre laquelle l'extrémité ouverte (10c) de la première conduite de fluide (10) s'applique au moins partiellement, de préférence complètement, dans la direction longitudinale (X).

6. Agencement d'amortisseur de pulsations (1) selon l'une quelconque des revendications précédentes, **caractérisé en ce que**
la section de liaison (13f) de l'élément d'insertion (13) est réalisée, au moins par sections, plus épaisse radialement que la section longitudinale (13h) de l'élément d'insertion (13).

7. Agencement d'amortisseur de pulsations (1) selon l'une quelconque des revendications précédentes, **caractérisé en ce que**
la section de liaison (13f) de l'élément d'insertion (13) est réalisée dans la direction longitudinale (X) et/ou dans la direction circonférentielle (U) continuellement plus épaisse radialement que la section longitudinale (13h) de l'élément d'insertion (13).

8. Agencement d'amortisseur de pulsations (1) selon l'une quelconque des revendications précédentes, **caractérisé en ce que**
l'élément d'insertion (13) présente, dans la direction longitudinale (X), une longueur prédéterminée qui est réalisée pour amortir une fréquence prédéterminée d'une pulsation d'un fluide.

9. Agencement d'amortisseur de pulsations (1) selon l'une quelconque des revendications précédentes, **caractérisé en ce que**
l'extrémité ouverte (10c) de la première conduite de fluide (10), orientée radialement vers l'extérieur et/ou radialement vers l'intérieur, présente au moins par sections une rugosité accrue dans la direction longitudinale (X) et/ou dans la direction circonférentielle (U).

10. Agencement d'amortisseur de pulsations (1) selon l'une quelconque des revendications précédentes, **caractérisé en ce que**
la première conduite de fluide (10) est un tube rigide (10).

11. Agencement d'amortisseur de pulsations (1) selon l'une quelconque des revendications précédentes, **caractérisé en ce que**
la deuxième conduite de fluide (11) est un tuyau flexible (11).

12. Agencement d'amortisseur de pulsations (1) selon l'une quelconque des revendications précédentes, **caractérisé en ce que**
l'élément d'insertion (13) est une pièce moulée par injection (13) en plastique ou une pièce métallique (13).

13. Agencement d'amortisseur de pulsations (1) selon l'une quelconque des revendications précédentes,
**caractérisé en ce que**
l'élément de liaison (12) est un manchon métallique (12).
